# DEMANDE DE BREVET EUROPEEN

(11) **EP 2 412 568 A1**
(43) Date de publication de la demande: **01.02.2012**
(21) Numéro de dépôt: 11173717.7
(22) Date de dépôt: 13.07.2011
(51) Int. Cl.: B60N 2/42, B60N 2/427

(54) **Assise de siège de véhicule comprenant une bosse anti-sous marinage**

(30) Priorité: 28.07.2010 FR 1056197
(71) Demandeur: Peugeot Citroën Automobiles SA, 78140 Vélizy-Villacoublay (FR)
(72) Inventeur: Peru, Marc, 92290 CHATENAY-MALABRY (FR)
(74) Mandataire: Vigand, Régis Louis Michel

(57) **Abrégé**

L'invention concerne une assise de siège de véhicule comprenant une bosse (2) anti-sous marinage et une poche (1) de gaz dont une première partie (11) est située derrière la bosse (2) anti-sous marinage, une deuxième partie (12) de la poche (1) de gaz étant disposée de manière à s'élever au-dessus de la bosse (2) anti-sous marinage au fur et à mesure que la première partie (11) est comprimée entre la bosse (2) anti-sous marinage et le bassin (4) d'un occupant de l'assise en cas de choc frontal.

## Description

L'invention concerne le domaine des assises de siège de véhicule comprenant une bosse anti-sous marinage. Dans un véhicule, les ceintures de sécurité et leurs ancrages sont disposées de manière à ce que le brin de ceinture ventral appuie en permanence sur les os du bassin de l'occupant du siège. Mais lors d'un choc frontal, le bassin peut pivoter de sorte que le brin de ceinture ventral glisse par dessus les os du bassin de l'occupant, se déportant sur l'abdomen de l'occupant du siège. Comme la résistance de l'abdomen de l'occupant est bien moindre que celle des os de son bassin, le brin de ceinture ventral peut engendrer, sous l'effet de la décélération due à un choc frontal subi par le véhicule, de graves lésions abdominales chez l'occupant du siège. Classiquement, pour lutter contre le sous marinage, l'assise du siège intègre une bosse anti-sous marinage.

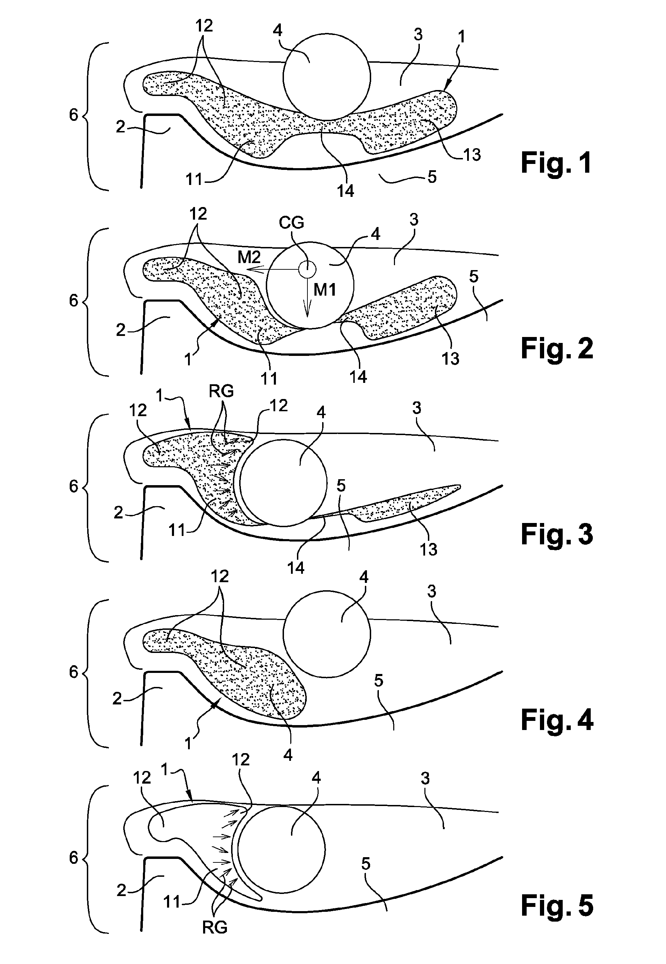

Selon un art antérieur, par exemple décrit dans la demande de brevet français FR 2907401, il est connu une assise de siège de véhicule comprenant une bosse anti-sous marinage et une poche de gaz située derrière la bosse anti-sous marinage. En cas de choc frontal, la poche qui était vide et aplatie se gonfle de gaz, freine la progression du bassin de l'occupant de l'assise en se comprimant et en transmettant le gaz vers l'arrière de la poche, plus précisément derrière et en dessous du bassin de l'occupant de l'assise (voir figures 3a à 3c), pour amener l'occupant contre la bosse d'anti-sous marinage en dégonflant celle-ci à la fin. Tout en aidant la bosse anti-sous marinage à jouer son rôle, le risque de pivotement du bassin et de passage au-dessus de la bosse anti-sous marinage n'est pas assez réduit.

Dans l'art antérieur comme dans l'invention, la présence de la poche de gaz, permet, à efficacité égale d'anti-sous marinage, d'avoir dans l'assise une bosse anti-sous marinage moins volumineuse et ou moins rigide, ce qui rend l'assise intrinsèquement, en position de repos, c'est-à-dire en l'absence de choc frontal, plus confortable et moins coûteuse à fabriquer. La présence de cette poche de gaz permet également à l'assise de s'adapter à la morphologie de l'occupant beaucoup plus aisément que ne pourrait le faire une simple bosse d'anti-sous marinage essentiellement rigide et peu déformable.

En effet, l'invention constate que la poche de gaz n'est pas située assez haut pendant sa compression pour constituer un véritable rempart de gaz s'appuyant sur la bosse anti-sous marinage. L'invention propose donc comme solution d'élever la poche de gaz pendant sa compression pour que, non seulement elle constitue un rempart de gaz en cas de frontal, mais aussi pour que ce rempart s'élève d'autant plus haut pendant et juste après le choc frontal que le mouvement vers l'avant du bassin de l'occupant de l'assise est rapide et violent, ceci afin justement de proposer un dispositif adapté pour retenir le bassin de l'occupant et l'empêcher de pivoter et de passer au-dessus de la bosse anti-sous marinage.

La disposition selon l'invention des différentes parties de la poche de gaz permet de supprimer ou au moins de réduire notablement le risque de passage par dessus la bosse anti-sous marinage tout en amortissant la rigueur de l'impact du bassin contre la bosse anti-sous marinage. Le bassin de l'occupant de l'assise concerne un bassin d'adulte assis au repos et considéré comme bien calé au fond du siège ou de la banquette conformément aux recommandations de sécurité pendant le roulage d'un véhicule. La poche de gaz contient préférentiellement de l'air.

Selon l'invention, il est prévu une assise de siège de véhicule comprenant une bosse anti-sous marinage et une poche de gaz dont une première partie est située derrière la bosse anti-sous marinage, caractérisée en ce qu'une deuxième partie de la poche de gaz est disposée de manière à s'élever au-dessus de la bosse anti-sous marinage au fur et à mesure que la première partie est comprimée entre la bosse anti-sous marinage et le bassin d'un occupant de l'assise en cas de choc frontal.

Un choc frontal est un choc qui arrive de face, par l'avant, que ce soit de face par l'avant par rapport à l'assise de siège de véhicule ou par rapport au véhicule, car les orientations, haut et bas, gauche et droite, de face et de côté, sont les mêmes pour l'assise de siège que pour le véhicule qui les intègre.

La deuxième partie de la poche de gaz qui s'élève est située au-dessus de la première partie de la poche de gaz qui est comprimée par le bassin de l'occupant.

Lors d'un choc frontal subi par le véhicule et donc par l'assise du siège ou des sièges intégrant une bosse d'anti-sous marinage ainsi qu'une poche de gaz, le bassin des occupants va se tasser successivement dans deux directions, tout d'abord dans un premier temps verticalement vers le bas en s'enfonçant dans l'assise du siège, et ensuite dans un deuxième temps horizontalement vers l'avant en avançant dans l'habitacle du véhicule. La poche de gaz présentera une capacité d'arrêt du bassin dans son mouvement vers l'avant qui sera sensiblement proportionnelle à la sollicitation exercée sur le bassin par la violence plus ou moins grande du choc frontal subi par le véhicule.

Pour éviter le phénomène de sous marinage, l'invention s'évertue à bloquer le plus possible l'avancée du bassin tout en empêchant la rotation de celui-ci et tout en amortissant le choc du bassin contre la bosse d'anti-sous marinage.

La poche de gaz effectue une retenue du bassin s'opposant aux efforts exercés par le bassin dans son mouvement vers l'avant par un champ de pression qui se répartit sur la surface de poche offerte au contact du bassin, surface qui augmente au fur et à mesure que la zone avant de la poche se comprime et s'élève. L'orientation de la résultante des forces de pression que le bassin exerce sur la poche de gaz sera plus stable que ne le serait celle d'une force ponctuelle, ce qui réduit le risque de pivotement du bassin de l'occupant et d'escalade de la bosse d'anti-sous marinage par le bassin de l'occupant. La surface de contact entre poche de gaz et bassin de l'occupant est variable au cours du choc frontal, ce qui lui permet de s'adapter plus facilement aussi bien à la sévérité du choc frontal qu'à la disparité de morphologie possible des occupants de siège.

Par rapport à l'art antérieur, les caractéristiques principales communes à tous les modes de réalisation et les caractéristiques secondaires n'appartenant qu'à certains modes de réalisation permettent d'améliorer globalement le compromis entre simplicité et coût et ou le confort de l'occupant du siège en mode de roulage normal (en l'absence de choc frontal).

De préférence, la poche est remplie de gaz, même en l'absence de choc frontal. Ainsi, la poche de gaz est déjà plus haute dès le départ, avant même l'arrivée du choc frontal, elle montera donc plus facilement à une hauteur suffisante pour faire rempart de gaz afin de retenir le bassin de l'occupant.

De préférence, la deuxième partie est partiellement située au-dessus de la bosse anti-sous marinage de manière à recouvrir la bosse anti-sous marinage. Et ceci même en l'absence de choc frontal. Plus la poche de gaz est située en position haute dès le départ, c'est-à-dire juste avant le choc frontal, plus facilement elle pourra monter à une hauteur suffisante pour faire rempart de gaz afin de retenir le bassin de l'occupant pendant et juste après le choc frontal. Préférentiellement, la bosse anti-sous marinage est entièrement recouverte.

De préférence, la poche de gaz ne se dégonfle pas avant que le mouvement du bassin de l'occupant vers l'avant ne soit bloqué. Le maintien de la poche de gaz dans l'état gonflé aide la deuxième partie de la poche à monter plus haut et à faire plus efficacement rempart de gaz s'opposant au mouvement vers l'avant du bassin de l'occupant. Préférentiellement, la poche de gaz ne se dégonfle pas pendant tout le choc frontal, ni même après celui-ci de manière avantageuse.

De préférence, la poche de gaz présente une troisième partie qui s'étend derrière le bassin de l'occupant, en l'absence de choc frontal. Ainsi, l'assise de siège est plus confortable pour l'occupant, en l'absence de choc frontal, dans la position de repos dans laquelle l'occupant est simplement assis sur le siège pendant le roulage du véhicule.

Lors du choc frontal, le bassin se tasse en deux temps successifs. Se tassant d'abord vers le bas, il sépare la poche de gaz en deux zones, une zone avant située devant lui, intégrant les première et deuxième parties de la poche, et une zone arrière située derrière lui, intégrant la troisième partie. La poche de gaz ainsi séparée en deux zones qui sont communicantes mais seulement par l'intermédiaire d'un goulot d'étranglement qui la portion écrasée par le bassin entre les deux zones. Ainsi, le gaz ne peut plus circuler assez vite pour passer de la zone avant à la zone arrière, lorsque le bassin se déplace ensuite vers l'avant. C'est pourquoi une surpression se crée dans la zone avant de la poche laquelle zone avant devient de plus en plus comprimée au fur et à mesure que le bassin de l'occupant avance, créant ainsi un rempart de gaz de plus en plus comprimé qui a donc tendance à s'opposer de plus en plus à la suite du mouvement vers l'avant du bassin de l'occupant, pour finir par le stopper complètement et ce, avant qu'il n'ait dépassé la bosse d'anti-sous marinage. Un rétrécissement entre les deux zones de la poche prévu dès le départ augmente cet effet rempart.

Avantageusement, la poche de gaz présente un rétrécissement entre la troisième partie d'une part et les première et deuxième parties d'autre part. Ce rétrécissement, existant déjà avant écrasement, empêche encore d'autant plus les première et deuxième parties situées à l'avant de la poche de gaz de se vider, sous la pression du bassin de l'occupant lorsqu'il avance après un choc frontal subi par l'assise et par le véhicule, au profit de la troisième partie située à l'arrière de la poche de gaz, les trois parties de la poche de gaz communiquant entre elles.

Selon une première réalisation, la poche de gaz est située à l'intérieur du coussin de l'assise. Ainsi, l'assise est plus confortable au repos, c'est-à-dire en l'absence de choc frontal. Selon une deuxième réalisation, la poche de gaz est située sous le coussin de l'assise. Ainsi, l'assise est plus simple à fabriquer.

L'invention concerne aussi une rangée d'un ou de plusieurs sièges arrière de véhicule, caractérisée en ce que l'assise du ou des sièges est selon l'invention. L'assise du siège est intégrée soit à un ou plusieurs sièges arrière distincts entre eux soit à une banquette de plusieurs sièges arrière soit encore à une banquette dite un tiers deux tiers. La structure des sièges arrière, différente de celle des sièges avant, facilite le pivotement du bassin de l'occupant augmentant ainsi le risque de sous marinage ; c'est pourquoi une assise selon l'invention est particulièrement intéressante pour les sièges arrière de véhicule.

L'invention concerne aussi un véhicule comprenant une rangée arrière selon l'invention. Cette rangée arrière peut comprendre une ou plusieurs assises selon l'invention.

L'invention concerne également une assise de siège de véhicule comprenant une bosse (2) anti-sous marinage et une poche (1) de gaz située au moins en partie derrière la bosse (2) anti-sous marinage, caractérisée en ce que la poche (1) est remplie de gaz, même en l'absence de choc frontal. L'invention concerne encore une assise de siège de véhicule comprenant une bosse (2) anti-sous marinage et une poche (1) de gaz située au moins en partie derrière la bosse (2) anti-sous marinage, caractérisée en ce que la poche (1) de gaz est située en partie au-dessus de la bosse (2) anti-sous marinage de manière à recouvrir la bosse (2) anti-sous marinage.

Un véhicule inclut notamment un camion, une voiture, un bus. Un véhicule est de préférence un véhicule à moteur, avantageusement terrestre. Un véhicule est préférentiellement une voiture.

L'invention va maintenant être décrite plus en détail à l'aide des figures ci-après, données à titre d'exemples illustratifs et non limitatifs, où :
- la figure 1 représente schématiquement un premier exemple préférentiel d'une assise de siège de véhicule selon l'invention, en position de repos, c'est-à-dire en l'absence de choc frontal ;
- la figure 2 représente schématiquement un premier exemple préférentiel d'une assise de siège de véhicule selon l'invention, en début de choc frontal ;
- la figure 3 représente schématiquement un premier exemple préférentiel d'une assise de siège de véhicule selon l'invention, en fin de choc frontal ;
- la figure 4 représente schématiquement un deuxième exemple d'une assise de siège de véhicule selon l'invention, en position de repos, c'est-à-dire en l'absence de choc frontal ;
- la figure 5 représente schématiquement un deuxième exemple d'une assise de siège de véhicule selon l'invention, en fin de choc frontal.

Un premier exemple préférentiel de réalisation de l'assise de siège de véhicule selon l'invention va être maintenant présenté en liaison avec les figures 1 à 3. Ce premier exemple optimise, pour l'occupant de cette assise, la sécurité d'anti-sous marinage en cas de choc frontal ainsi que le confort en l'absence de choc frontal.

La figure 1 représente schématiquement un premier exemple préférentiel d'une assise de siège de véhicule selon l'invention, en position de repos, c'est-à-dire en l'absence de choc frontal. L'assise 6 comprend un soubassement 5 qui est une structure 5 d'assise intégrant à l'avant de façon saillante et proéminente une bosse 2 d'anti-sous marinage. Au-dessus de la structure 2, se trouve le coussin 3 d'assise dans lequel est intégrée la poche 1 de gaz. Un bassin 4 d'occupant est situé sur le coussin 3 d'assise.

La poche 1 de gaz comprend une première partie 11, une deuxième partie 12, une troisième partie 13, et un rétrécissement 14 séparant la zone avant de la poche 1 comprenant les première 11 et deuxième 12 parties d'une part de la zone arrière de la poche 1 comprenant la troisième partie 13 d'autre part. La fonction du rétrécissement 14 est d'une part de permettre les échanges de gaz entre la zone avant et la zone arrière de la poche 1 mais d'autre part de ralentir des échanges de gaz et ainsi d'empêcher tout échange de gaz notable dans un temps court, par exemple pendant un choc frontal subi par le véhicule.

La première partie 11 de la poche 1 est située entre la bosse 2 et le bassin 4. C'est la partie inférieure de la zone avant de la poche 1. La deuxième partie 12 de la poche 1 est située devant le bassin 4 et partiellement au-dessus de la bosse 2. La deuxième partie 12 de la poche 1 recouvre entièrement la bosse 2. C'est la partie supérieure de la zone avant de la poche 1. La troisième partie 13 de la poche 1 est située derrière le bassin 4. Il constitue à lui seul la zone arrière de la poche 1. Toutes les parties de la poche 1 sont librement communicantes entre elles. La poche 1 est donc préférentiellement non cloisonnée. La constitution en plusieurs parties de la poche 1 apporte un confort optimal en l'absence de choc frontal, c'est-à-dire en position de repos comme sur la figure 1.

La figure 2 représente schématiquement un premier exemple préférentiel d'une assise de siège de véhicule selon l'invention, en début de choc frontal. En début de choc frontal subi par le véhicule et donc par ricochet par l'assise 6, le bassin 4 non solidarisé à l'assise 6, et en particulier son centre de gravité CG, va être successivement soumis à deux efforts correspondant respectivement à deux mouvements, d'abord un premier mouvement M1 dirigé vers le bas et tendant à s'enfoncer dans l'assise, et ensuite un deuxième mouvement M2 dirigé vers l'avant et tendant à avancer vers la bosse 2.

Le rétrécissement 14 a été écrasé au cours du premier mouvement M1 vers le bas, les zones avant et arrière de la poche 1 ne peuvent plus échanger de quantité notable de gaz dans le temps restreint pendant lequel va se dérouler d'une part le choc frontal subi par le véhicule et d'autre part la séquence associée de mouvements du bassin 4.

Le gaz contenu dans les deux première 11 et deuxième 12 parties, va y rester. Le mouvement M2 vers l'avant du bassin 4 comprime la première partie 11 coincée entre ce même bassin 4 et la bosse 2. Cette compression tend à soulever la deuxième partie 12 qui commence à constituer un rempart de gaz de plus en plus dur et résistant car de plus en plus comprimé par la compression de la première partie 11 provoquée par la poussée progressive du bassin 4.

La figure 3 représente schématiquement un premier exemple préférentiel d'une assise de siège de véhicule selon l'invention, en fin de choc frontal. En fin de choc frontal, la première partie 11 est complètement écrasée entre le bassin 4 et la bosse 2. Elle constitue avec la deuxième partie 12 surélevée et également comprimée un rempart de gaz RG qui est dur et résistant d'une part et élevé d'autre part de sorte que ce rempart de gaz RG empêche le bassin 4 de pivoter et de passer au-dessus de la bosse 2 d'anti-sous marinage laquelle n'a pas besoin d'avoir été prévue excessivement volumineuse et ou excessivement rigide, grâce à la présence et à la disposition de la poche 1 de gaz.

Plus le choc frontal est violent, plus le bassin 4 pousse vers l'avant et comprime le gaz dans les première 11 et deuxième 12 parties, et plus le rempart de gaz RG s'élève et se durcit, constituant ainsi un moyen de retenue du bassin 4 de plus en plus efficace et donc quasiment infranchissable ou à tout le moins beaucoup moins facilement franchissable que la poche de gaz de l'art antérieur.

Un deuxième exemple optionnel de réalisation de l'assise de siège de véhicule selon l'invention va être maintenant présenté en liaison avec les figures 4 à 5. Ce deuxième exemple optimise, pour l'occupant de cette assise, la sécurité d'anti-sous marinage en cas de choc frontal.

La figure 4 représente schématiquement un deuxième exemple d'une assise de siège de véhicule selon l'invention, en position de repos, c'est-à-dire en l'absence de choc frontal. La poche 1 de gaz se réduit à sa zone avant, à savoir les première 11 et deuxième 12 parties. Le fonctionnement de la poche 1 de gaz comme moyen de retenue reste similaire à celui du premier exemple, le confort de l'assise 6 en général et de son coussin 3 en particulier étant toutefois moindre, en position de repos comme sur la figure 4, c'est-à-dire en l'absence de choc frontal. Le compromis entre sécurité et confort, intrinsèquement difficile à réaliser, est notablement mieux réussi au niveau du premier exemple que du deuxième exemple.

La figure 5 représente schématiquement un deuxième exemple d'une assise de siège de véhicule selon l'invention, en fin de choc frontal. Le rempart de gaz RG s'est constitué de manière similaire à celui du premier exemple représenté sur la figure 3. L'absence de zone arrière dans la poche 1 de gaz n'a pas été un handicap notable. Le confort global de l'assise 6 et du coussin 3 est toutefois moindre que dans le premier exemple. Avant le choc frontal subi par le véhicule, tout au long du choc frontal et une fois les effets du choc frontal passés, la poche 1 de gaz est restée remplie de gaz. A aucun moment, elle n'a été gonflée ou dégonflée. Cette poche 1 de gaz peut être constituée d'un simple sac hermétique rempli de gaz. Elle est alors particulièrement simple et peu coûteuse. Le gaz est de préférence de l'air, gaz stable et bon marché.

## Revendications

1. Assise de siège de véhicule comprenant une bosse (2) anti-sous marinage et une poche (1) de gaz dont une première partie (11) est située derrière la bosse (2) anti-sous marinage, **caractérisée en ce qu'**une deuxième partie (12) de la poche (1) de gaz est disposée de manière à s'élever au-dessus de la bosse (2) anti-sous marinage au fur et à mesure que la première partie (11) est comprimée entre la bosse (2) anti-sous marinage et le bassin (4) d'un occupant de l'assise en cas de choc frontal et **en ce que** la poche (1) est remplie de gaz, même en l'absence de choc frontal.

2. Assise de siège de véhicule selon la revendication 1, **caractérisée en ce que** la deuxième partie (12) est partiellement située au-dessus de la bosse (2) anti-sous marinage de manière à recouvrir la bosse (2) anti-sous marinage.

3. Assise de siège de véhicule selon l'une quelconque des revendications précédentes, **caractérisée en ce que** la poche (1) de gaz ne se dégonfle pas avant que le mouvement du bassin (4) de l'occupant vers l'avant ne soit bloqué.

4. Assise de siège de véhicule selon l'une quelconque des revendications précédentes, **caractérisée en ce que** la poche (1) de gaz présente une troisième partie (13) qui s'étend derrière le bassin (4) de l'occupant, en l'absence de choc frontal.

5. Assise de siège de véhicule selon la revendication 4, **caractérisée en ce que** la poche (1) de gaz présente un rétrécissement (14) entre la troisième partie (13) d'une part et les première (11) et deuxième (12) parties d'autre part.

6. Assise de siège de véhicule selon l'une quelconque des revendications 1 à 5, **caractérisée en ce que** la poche (1) de gaz est située à l'intérieur du coussin (3) de l'assise.

7. Assise de siège de véhicule selon l'une quelconque des revendications 1 à 5, **caractérisée en ce que** la poche (1) de gaz est située sous le coussin (3) de l'assise.

8. Rangée d'un ou de plusieurs sièges arrière de véhicule, **caractérisée en ce que** l'assise (6) du ou des sièges est selon l'une quelconque des revendications précédentes.

9. Véhicule **caractérisé en ce qu'**il comprend une rangée arrière selon la revendication 8.
